# EUROPÄISCHE PATENTSCHRIFT

(11) **EP 0 607 507 B1**
(45) Veröffentlichungstag und Bekanntmachung des Hinweises auf die Patenterteilung: **22.11.1995**
(21) Anmeldenummer: 93117219.1
(22) Anmeldetag: 23.10.1993
(51) Int. Cl.: A47J 43/07

(54) **Handrührgerät**
Hand mixing device
Mixeur à main

(30) Priorität: 19.01.1993 DE 4301209
(43) Veröffentlichungstag der Anmeldung: 27.07.1994
(73) Patentinhaber: MAWEVA HOLDING AG (Ltd.), CH-9532 Rickenbach b. Wil (CH)
(72) Erfinder: Rüttimann, Max, CH-8562 Märstetten (CH)
(74) Vertreter: Rüger, Rudolf, Dr.-Ing.

(56) Entgegenhaltungen:
- DE-B- 1 174 949
- DE-B- 1 182 399
- DE-B- 1 242 817
- FR-A- 1 117 914
- FR-A- 2 470 576

## Beschreibung

Die Erfindung betrift ein Handrührgerät mit einem in einem eine Handhabe aufweisenden Gehäuse angeordneten Motor mit wenigstens einer von dem Motor antreibbaren Arbeitswelle, die an dem Gehäuse oder einem mit diesem verbundenen Teil drehbar gelagert ist und die an ihrem freien Ende zur Aufnahme eines aufsteckbaren Werkzeuges eingerichtet und mit Mitnehmermitteln für das Werkzeug versehen ist sowie mit einem Werkzeug, das eine zum Aufstecken auf das Wellenende eingerichtete Nabe mit einer Bohrungswandung aufweist, die zur reibschlüssigen Halterung auf dem Wellenende zumindest bereichsweise elastisch radial verformbar ist.

Handrührgeräte dieser Art, die mit zwei parallelen Wellen oder in der Ausführungsform als sogenannte Stabmixer mit einer Abtriebswelle arbeiten, bieten in der Regel dem Benutzer die Möglichkeit, verschiedene Werkzeuge zum Pürieren, Zerkleinern, Quirlen, Rühren u.dgl. auf das Wellenende aufzustecken. Diese Werkzeuge (vgl. FR-A-111791) weisen eine in Gestalt einer Metallbüchse ausgebildete Nabe auf, die randseitig mit einer Nut versehen ist, in die bei aufgestecktem Werkzeug ein Mitnehmerstift der Abtriebswelle eingreift. Um zu verhindern, daß das Werkzeug im Betrieb unbeabsichtigt von dem Wellenende freikommt, ist die Nabe mit einem elastisch verformbaren Bereich versehen, der beim Aufstecken des Werkzeugs etwas nach außen gebogen wird, um damit die für die reibschlüssige Fixierung erforderliche Vorspannung zu erzeugen. Typischerweise sind in der Wandung zwei parallele Längsschnitte vorgesehen, die zwischen sich einen Federlappen begrenzen, der diesen deformierbaren Bereich bildet.

Um das Aufstecken zu erleichtern, ist die Nabe im Bereiche ihres freien Randes auf der Innenseite angefast.

In der Praxis hat sich gezeigt, daß diese Ausbildung der Werkzeugbefestigung an dem Wellenende zwar sehr leicht zu handhaben und für alle praktisch vorkommenden Betriebsbedürfnisse völlig ausreichend ist, aber doch eine gewisse Sorgfalt erfordert. Wird nämlich das Werkzeug mit seiner Nabe schräg zu der Wellenachse liegend an das Wellenende angesetzt und dann unter entsprechender Gewalteinwirkung auf das Wellenende axial aufgezwängt, so kann es unter Umständen dazu kommen, daß der Federlappen übermäßig radial nach außen gebogen wird, so daß er eine bleibende plastische Verformung erfährt. Die Folge davon ist, daß die reibschlüssige Halterung des aufgesteckten Werkzeuges auf der Arbeitswelle nicht mehr gewährleistet ist und das Werkzeug sich im Betrieb unbeabsichtigt von der Arbeitswelle lösen kann. Eine Abhilfe ist dann nur in der Weise möglich, daß der Federlappen beispielsweise mit einer Zange wieder nach innen gebogen wird, so daß er seine Funktion als Halteelement erfüllen kann. Dies setzt aber eine gewisse handwerkliche Geschicklichkeit auf seiten des Benutzers voraus, die nicht immer erwartet werden kann.

Ein anderers Problem der Halterung von Werkzeugen in Handrührgeräten oder Küchenmaschinen tritt bei solchen Werkzeugen auf, die einen von dem Arbeitsbereich abliegenden Schaft aufweisen, der in eine angetriebene Aufnahmehülse eingesteckt wird. In diesen Fällen müssen Vorkehrungen getroffen werden, damit das Werkzeug nicht wieder aus der Aufnahmehülse herausfällt, wenn es in das zu bearbeitende Gut gesenkt wird, weil die Aufnahmehülse ein stabiles, nicht federndes Teil ist, das den Werkzeugschaft mit Spiel umschließt und auch bei unsorgfältiger Handhabung beim Werkzeugwechsel nicht beschädigt werden kann. Wegen des radialen Spiels zwischen der Aufnahmehülse und dem Werkzeugschaft sind die Verdrehsicherung für den Werkzeugschaft und dessen axiale Halterung häufig konstruktiv voneinander getrennt.

Bspw. aus der FR-A-2 470 576 ist ein Knethaken bekannt, der an seinem von dem Arbeitsbereich abliegenden Schaftende mit einem koaxial angeordneten Stift versehen ist, der einen kugelförmigen Kopf aufweist. Dieser Stift bildet ein Teil einer als axiale Halterung wirkenden Rastvorrichtung, mit der der Knethaken in der Aufnahmehülse festgehalten wird. Der Stift hat jedoch keinerlei Funktion als Einführhilfe für den Knethaken in die Aufnahmehülse.

Aufgabe der Erfindung ist es deshalb, hier abzuhelfen und ein Handrührgerät der eingangs genannten Art zu schaffen, das sich dadurch auszeichnet, daß das Aufstecken der jeweils eine federnde Nabe tragenden Werkzeuge vereinfacht ist, und zwar ohne daß die Gefahr einer ungewollten Beeinträchtigung der reibschlüssigen Werkzeughalterung auf der Arbeitswelle besteht.

Zur Lösung dieser Aufgabe ist das Handrührgerät erfindungsgemäß dadurch gekennzeichnet, daß die Arbeitswelle an dem Wellenende eine ringsum laufende profilierte Vertiefung aufweist, die bei aufgestecktem Werkzeug innerhalb dessen Nabe liegt und die auf der Motorseite durch die zylindrische Welle oder einen zylindrischen Abschnitt derselben und auf der anderen Seite durch einen konvexen balligen Wellenabschnitt begrenzt ist, der sich bis zur Stirnseite des Wellenendes erstreckt.

Da bei solchen Händrührgeräten die Arbeitswelle mit einer sehr hohen Drehzahl (bis zu 20 000 U/min) umläuft, muß sichergestellt sein, daß das Werkzeug auf der Arbeitswelle einwandfrei zentriert ist. Es treten sonst eine unerwünschte Geräuschentwicklung und eine Unwucht auf, die zu einer starken Beanspruchung der Lagerung der Arbeitswelle führt. Aus diesen Gründen ist es vorteilhaft, daß das Wellenende, insbesondere bei Werkzeugen mit axial kurzen Naben, anschließend an die Vertiefung auf der Seite des balligen Abschnittes einen Führungsbereich mit dem Wellendurchmesser aufweist. Dieser Führungsbereich kann an sich grundsätzlich durch eine ringsum laufende Kante gebildet sein, doch ist es in der Regel vorzuziehen, daß er glattwandig zylindrisch ist, wobei er eine axiale Länge von größer als 0,2 mm aufweist. Durch diese Mindestlänge bei dem üblichen Wellendurchmesser von 6 mm wird verhindert, daß der Führungsbereich beim öfteren Aufstecken von Werkzeugen so stark abgenutzt wird, daß sich eine merkliche Verkleinerung seines Durchmessers ergibt, die seine Führungsfunktion beeinträchtigen würde. Der Führungsbereich soll gewährleisten, daß die Nabe beidseitig der Vertiefung an dem Wellenende einwandfrei radial geführt ist.

Der ballige Wellenabschnitt ist in einer bevorzugten Ausführungsform im wesentlichen in Form eines Kugelabschnittes ausgebildet. Auch ist es zweckmäßig, wenn die Vertiefung ein Profil aufweist, das, ausgehend von einem kleinsten Durchmesser, eine zu der Motorseite hin sich stetig nach außen erweiterte Fläche aufweist, die beim Aufstecken des Werkzeugs als Führungsfläche für einen Innenrand der Nabe wirkend ausgebildet ist. Das Profil der Vertiefung ist vorzugsweise im Längsschnitt im wesentlichen kreisförmig gekrümmt mit einem außerhalb der Arbeitswelle liegenden Krümmungsmittelpunkt, wobei der Radius des Kugelabschnittes kleiner ist als der Verkrümmungsradius der Vertiefung. Dadurch wird verhindert, daß der Federlappen der Nabe beim Aufstecken des Werkzeuges übermäßig beansprucht wird, d.h. daß radiale Kräfte entstehen, welche den Federlappen so weit nach außen drücken, daß er in seiner Funktion nachteilig beeinflußt wird. Von Vorteil ist es schließlich, wenn die axiale Länge des balligen Abschnittes kleiner ist als die axiale Länge der Vertiefung.

Durch die neue Ausbildung des Wellenendes wird erreicht, daß die Nabe beim Aufstecken des Werkstückes selbsttätig zentriert wird, so daß der Benutzer des Handrührgerätes keine besondere Sorgfalt beim Werkzeugwechsel aufwenden muß. Selbst wenn er das Werkzeug zunächst schräg zu der Wellenachse an das Wellenende ansetzt, ist gewährleistet, daß die Nabe beim Aufstecken automatisch in eine genau fluchtende Ausrichtung zu der Wellenachse kommt, ohne daß der Federlappen an der Werkzeugnabe einer unzulässigen Beanspruchung ausgesetzt wäre.

In der Zeichnung ist ein Ausführungsbeispiel des Gegenstandes der Erfindung dargestellt. Es zeigen:
- Fig. 1: ein Handrührgerät gemäß der Erfindung, in einer Seitenansicht,
- Fig. 2: einen Ausschnitt des Handrührgeräts nach Fig. 1 im Bereiche des freien Endes der Arbeitswelle, im axialen Schnitt in einer Seitenansicht und in einem anderen Maßstab,
- Fig. 3: ein Werkzeug zum Aufstecken auf das Wellenende nach Fig. 2, in perspektivischer Darstellung, und
- Fig. 4 und 5: die Nabe des Werkzeugs nach Fig. 3 und das Wellenende nach Fig. 2 in zwei verschiedenen Zuständen beim Aufstecken des Werkzeugs, im Ausschnitt , in einer Seitenansicht und in einem anderen Maßstab.

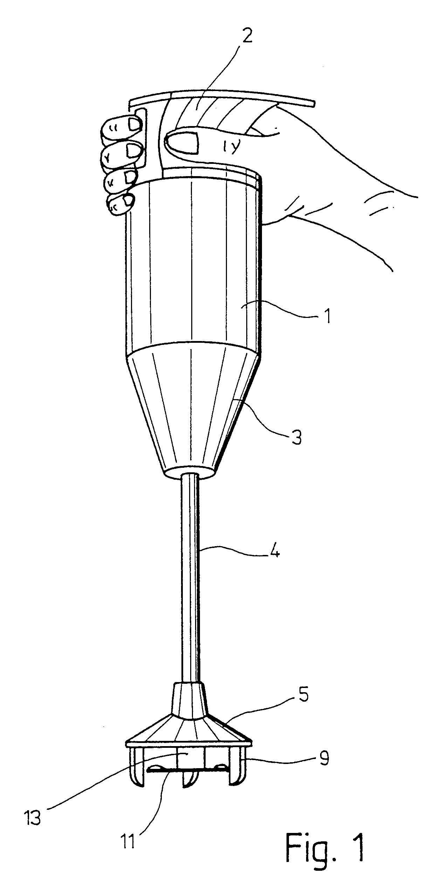

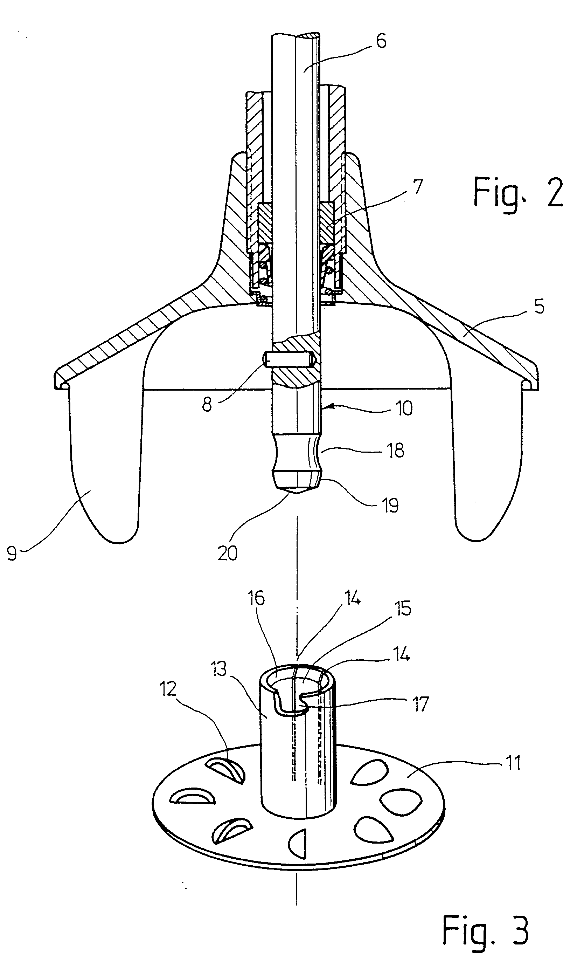

Das in Fig. 1 dargestellte Handrührgerät in Gestalt eines sogenannten Stabmixers weist ein im wesentlichen zylindrisches Gehäuse 1 auf, das an einer Seite mit einem Handhabungsabschnitt 2 versehen ist, der es erlaubt, das Gerät in diesem Bereich in der in der Figur dargestellten Weise mit einer Hand zu umfassen. An einem auf der gegenüberliegenden Seite angeformten kegelstumpfförmigen Gehäuseabschnitt 3 ist ein Schutzrohr 4 angefügt, das endseitig eine Schutzhaube 5 trägt, die im radialen Abschnitt eine Arbeitswelle 6 umgibt, die typischerweise einen Durchmesser von 6 mm aufweist. Die Arbeitswelle 6 ist in dem Gehäuse 1 mit einem darin untergebrachten, nicht weiter dargestellten Elektromotor über ein ebenfalls nicht veranschaulichtes Getriebe gekuppelt. Sie ist bei 7 in dem Schutzrohr 4 radial gelagert und trägt einen seitlich vorstehenden Mitnehmerstift 8, der innerhalb der im wesentlichen glockenförmigen Schutzhaube 5 liegt, wie dies aus Fig. 2 zu entnehmen ist. An der Schutzhaube 5 sind ringsum verteilt vier im radialen Abstand von der Arbeitswelle 6 etwa parallel zu dieser ausgerichtete Flügel 9 angeformt, die im Betrieb die Strömungsverhältnisse im Bereiche des auf das freie Wellenende 10 aufgesteckten Werkzeuges beeinflussen und im übrigen einen Schutz für den Arbeitsbehälter bilden.

Ein Beispiel eines solchen Werkzeuges zum Quirlen ist in Fig. 3 veranschaulicht. Es weist eine kreisrunde Werkzeugscheibe 11 auf, die mit kugelsegmentförmigen Ausprägungen 12 versehen ist und eine koaxiale Nabe 13 in Gestalt einer aus einem federelastischen Material, insbesondere Stahl, bestehenden Aufsteckhülse trägt. Die Nabe 13 ist mit zwei parallelen Längsschlitzen 14 versehen, die einen Federlappen 15 begrenzen, der bei auf das Wellenende 10 aufgestecktem Werkzeug radial nach innen zu elastisch vorgespannt ist und eine reibschlüssige Halterung des Werkzeugs über die Nabe 13 an dem Wellenende 10 bewirkt. Im Bereiche ihrer Berandung ist die Nabe 13 innen bei 16 kegelig angefast.

In eine am Rand der Nabe 13 angeordnete randoffene Kerbe 17 greift bei auf das Wellenende 10 aufgestecktem Werkzeug der Mitnehmerstift 8 ein, so daß eine drehfeste Kupplung mit der Arbeitswelle 6 gewährleistet ist.

Das zylindrische Wellenende 10 ist mit einer ringsum laufenden Vertiefung 18 ausgebildet, die sich auf der Motorseite an die zylindrische Außenwand des Wellenendes 10 anschließt und die auf der anderen Seite durch einen balligen Abschnitt 19 des Wellenendes 10 begrenzt ist, der bis zu der Stirnseite 20 des Wellenendes 10 reicht.

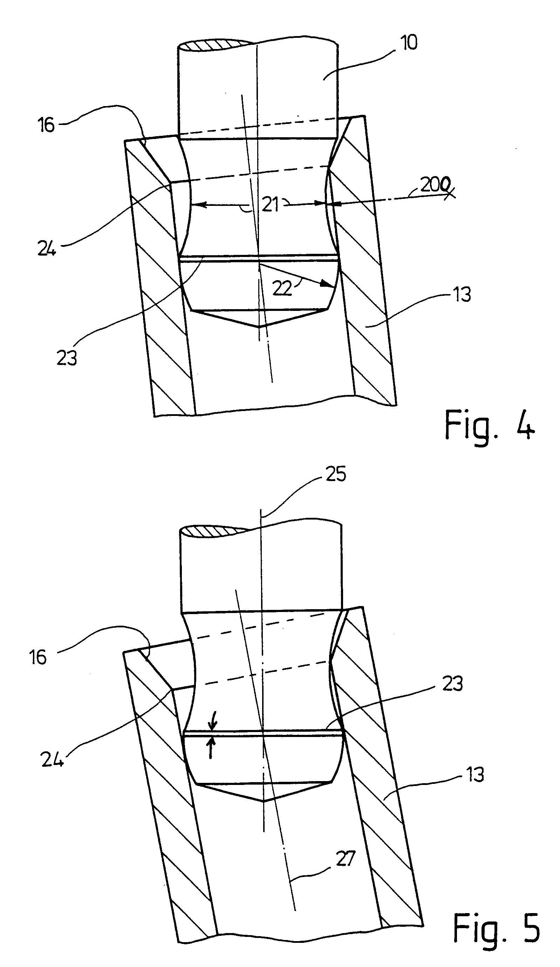

Die ringsum laufende Vertiefung 18 ist profiliert. Sie weist ein Profil auf, das im Längsschnitt im wesentlichen kreisförmig gekrümmt mit einem außerhalb der Arbeitswelle 6 liegenden Krümmungsmittelpunkt 200 (Fig. 4) gestaltet ist. Der axial etwa mittig liegende kleinste Durchmesser 21 der Vertiefung 18 ist mit 21 bezeichnet.

Der ballige Abschnitt 19 ist im wesentlichen in Form eines Kugelabschnittes ausgebildet. Sein innerhalb der Arbeitswelle 6 liegender Radius 22 ist kleiner als der Krümmungsradius der Vertiefung 18. Er beträgt bei dem angegebenen Wellendurchmesser von 6 mm ca. 4 mm, während der Radius der Vertiefung 18 sich auf ca. 5,1 mm beläuft. Wie insbesondere aus den Fig. 4, 5 zu ersehen, ist die axiale Länge des Abschnittes 19 wesentlich kleiner (etwa ein Viertel) als die axiale Länge der Vertiefung 18.

Zwischen dem balligen Abschnitt 19 und der Vertiefung 18 liegt ein glattwandig zylindrischer Führungsbereich 23, dessen Durchmesser gleich dem Durchmesser der Arbeitswelle 6 im Bereiche des Wellenendes 10 ist und dessen axiale Länge klein im Vergleich zur axialen Länge der Vertiefung 18 und des balligen Abschnittes 19 ist. Im vorliegenden Falle beträgt die axiale Länge des Führungsabschnittes 23 0,2 mm.

Wenn das in Fig. 3 dargestellte Werkzeug mit seiner Nabe 13 schräg auf das Wellenende 10 aufgesteckt wird, kommt die Nabe 13, wie aus Fig. 5 zu ersehen, zunächst mit seiner die Anfasung 16 begrenzenden Innenkante 24 an der eine Führungsfläche bildenden, konkaven Umfangsfläche der Vertiefung 18 in dem Bereich oberhalb des kleinsten Durchmessers 21 zur Anlage. Zufolge seiner Kugelform erlaubt der ballige Bereich 19 diese Schräglage der Nabe 13 bezüglich der in Fig. 5 bei 25 angedeuteten Wellenachse, ohne daß auf die Innenwandung der Nabe 13 und damit den Federlappen 15 radiale Kräfte ausgeübt würden.

Im weiteren Verlauf der Aufsteckbewegung gleitet die Kante 24 auf der in diesem Bereich nach außen zu sich erweiternden Umfangsfläche der Vertiefung 18 mit der Folge, daß die Nabe 13 automatisch mit ihrer Achse 27 auf die Wellenachse 25 ausgerichtet wird.

Diese Wirkung ist aus einem Vergleich der Fig. 4 und 5 ohne weiteres zu ersehen, wobei Fig. 4 einen Zustand veranschaulicht, bei dem die Nabe 13 im Vergleich zu dem Zustand nach Fig. 5 bereits weiter auf das Wellenende 10 aufgeschoben ist.

Wenn die Kante 24 schließlich das motorseitige Ende der Umfangsfläche der Vertiefung 18 erreicht, ist die Nabe 13 auf diese Weise in die exakte Fluchtrichtung zu der Arbeitswelle 6 gebracht. Im weiteren Verlauf der Aufsteckbewegung gleitet deshalb die zylindrische Innenwand der Nabe 13 auf den motorseitigen zylindrischen Abschnitt des genau koaxial stehenden Wellenendes 10. Der Aufsteckvorgang ist beendet, sowie der Mitnehmerstift 8 (Fig. 1) in die Kerbe 17 eingreift und ein weiteres axiales Vorschieben der Nabe 13 verhindert.

Bei so auf das Wellenende 10 aufgestecktem Werkzeug liegt die Vertiefung 18 innerhalb der Nabe 13, die auf dem Wellenende 10 auf beiden Seiten der ringsum laufenden Vertiefung 18 zum einen durch den Führungsbereich 23 und zum anderen den anschließenden zylindrischen Abschnitt des Wellenendes 10 exakt radial geführt ist. In dieser Stellung ist die Nabe 13 axial durch die radiale Vorspannung des Federlappens 15 reibschlüssig gehalten.

## Patentansprüche

1. Handrührgerät mit einem in einem eine Handhabe (2) aufweisenden Gehäuse (1) angeordneten Motor, mit wenigstens einer von dem Motor antreibbaren Arbeitswelle (6), die an dem Gehäuse (1) oder einem mit diesem verbundenen Teil drehbar gelagert ist und die an ihrem freien Ende (10) zur Aufnahme eines aufsteckbaren Werkzeuges eingerichtet und mit Mitnehmermitteln (8) für das Werkzeug versehen ist, sowie mit einem Werkzeug, das eine zum Aufstecken auf das Wellenende (10) eingerichtete Nabe (13) mit einer Bohrungswandung aufweist, die zur reibschlüssigen Halterung auf dem Wellenende (10) zumindest bereichsweise elastisch radial verformbar ist, dadurch gekennzeichnet, daß die Arbeitswelle (6) an dem Wellenende (10) eine ringsum laufende profilierte Vertiefung (18) aufweist, die bei aufgestecktem Werkzeug innerhalb dessen Nabe (13) liegt und die auf der Motorseite durch die zylindrische Welle (6, 10) oder einen zylindrischen Abschnitt derselben und auf der anderen Seite durch einen konvexen, balligen Wellenabschnitt (19) begrenzt ist, der sich bis zur Stirnseite des Wellenendes (10) erstreckt.

2. Handrührgerät nach Anspruch 1, dadurch gekennzeichnet, daß das Wellenende (10) anschließend an die Vertiefung (18) auf der Seite des balligen Abschnittes (19) einen Führungsbereich (23) mit dem Wellendurchmesser aufweist.

3. Handrührgerät nach Anspruch 2, dadurch gekennzeichnet, daß der Führungsbereich (23) glattwandig zylindrisch ist.

4. Handrührgerät nach Anspruch 3, dadurch gekennzeichnet, daß die axiale Länge des Führungsbereiches (23) größer als 0,2 mm beträgt.

5. Handrührgerät nach einem der vorhergehenden Ansprüche, dadurch gekennzeichnet, daß der ballige Wellenabschnitt (19) im wesentlichen in Form eines Kugelabschnittes ausgebildet ist.

6. Handrührgerät nach einem der vorhergehenden Ansprüche, dadurch gekennzeichnet, daß die Vertiefung (18) ein Profil aufweist, das, ausgehend von einem kleinsten Durchmesser (21) eine zu der Motorseite hin sich stetig nach außen zu erweiternde Fläche aufweist, die beim Aufstecken des Werkzeuges als Führungsfläche für einen Innenrand (24) der Nabe (13) wirkend ausgebildet ist.

7. Handrührgerät nach Anspruch 6, dadurch gekennzeichnet, daß das Profil der Vertiefung (18) im Längsschnitt im wesentlichen kreisförmig gekrümmt mit einem außerhalb der Arbeitswelle (6) liegenden Krümmungsmittelpunkt (200) ist.

8. Handrührgerät nach den Ansprüchen 6 und 7, dadurch gekennzeichnet, daß der Radius (22) des Kugelabschnittes (19) kleiner ist als der Krümmungsradius der Vertiefung (18).

9. Handrührgerät nach einem der vorhergehenden Ansprüche, dadurch gekennzeichnet, daß die axiale Länge des balligen Abschnitts (19) kleiner ist als die axiale Länge der Vertiefung (18).

## Claims

1. Hand mixing device having a motor arranged in a housing (1) provided with a holding portion (2), having at least one operating shaft (6), which may be driven by the motor and is rotatably mounted on the housing (1) or on a part connected thereto and which is adapted at its free end (10) to receive an attachable implement and is equipped with coupling means (8) for the implement, also having a implement which has a hub (13) adapted for fitting onto the shaft end (10) with a hole wall, which may be, at least in some areas, radially and elastically deformed for frictional engagement on the shaft end (10), characterised in that the operating shaft (6) on the shaft end (10) has a circumferential, profiled ring groove (18), which lies inside the hub (13) of the implement when said implement is attached and which is defined on the motor side by the cylindrical shaft (6, 10) or a cylindrical section thereof and on the other side by a convex ball-shaped shaft section (19) extending as far as the front side of the shaft end (10).

2. Hand mixing device according to Claim 1, characterised in that the shaft end (10) adjoining the groove (18) on the side of the ball-shaped section (19) has a guide surface (23) with the shaft diameter.

3. Hand mixing device according to Claim 2, characterised in that the guide surface (23) is cylindrical with smooth walls.

4. Hand mixing device according to Claim 3, characterised in that the axial length of the guide surface (23) is greater than 0.2 mm.

5. Hand mixing device according to one of the preceding claims, characterised in that the ball-shaped shaft section (19) is constructed essentially in the form of a spherical segment.

6. Hand mixing device according to one of the preceding claims, characterised in that the groove (18) has a profile with a surface, which, starting from a smallest diameter (21), constantly widens outwards towards the motor side and which is constructed to act as a guide surface for an inside edge (24) of the hub (13) during attachment of the implement.

7. Hand mixing device according to Claim 6, characterised in that the profile of the groove (18) in longitudinal section is curved essentially in circular form with a centre of curvature (200) lying outside the operating shaft (6).

8. Hand mixing device according to Claims 6 and 7, characterised in that the radius (22) of the spherical section (19) is smaller than the radius of curvature of the groove (18).

9. Hand mixing device according to one of the preceding claims, characterised in that the axial length of the ball-shaped section (19) is smaller than the axial length of the groove (18).

## Revendications

1. Batteur-malaxeur portatif comportant un moteur logé dans une enveloppe (1) munie d'une poignée (2), au moins un arbre d'entraînement (6) qui est entraîné par le moteur, est monté tournant dans l'enveloppe (1) ou dans un élément lié à celle-ci et dont l'extrémité (10) libre est aménagée pour recevoir un outil encliquetable et est pourvue de moyens d'entraînement (8) pour ledit outil, ainsi qu'un outil qui comprend un moyeu (13) aménagé pour s'encliqueter sur l'extrémité (10) de l'arbre et présente une paroi d'alésage déformable élastiquement dans la direction radiale, dans certaines zones au moins, à des fins de fixation par adhérence sur l'extrémité (10) de l'arbre d'entraînement, caractérisé par le fait que l'arbre (6) présente à son extrémité (10) une dépression (18) profilée annulaire qui, lorsque l'outil est monté, se trouve à l'intérieur du moyeu de dernier et qui est délimitée côté moteur par l'arbre (6, 10) cylindrique ou un tronçon cylindrique de celui-ci et de l'autre côté par un tronçon (19) d'arbre convexe bombé qui s'étend jusqu'à la face frontale de l'extrémité (10) de l'arbre.

2. Batteur-malaxeur portatif selon la revendication 1, caractérisé par le fait que l'extrémité (10) de l'arbre comporte à la suite de la dépression (18) du côté du tronçon (19) bombé, une partie de guidage (23) au diamètre de l'arbre.

3. Batteur-malaxeur portatif selon la revendication 2, caractérisé par le fait que la partie de guidage (23) est cylindrique, avec une paroi lisse.

4. Batteur-malaxeur portatif selon la revendication 3, caractérisé par le fait que la longueur dans la direction axiale de la partie de guidage (23) est supérieure à 0,2 mm.

5. Batteur-malaxeur portatif selon l'une des revendications précédentes, caractérisé par le fait que le tronçon (19) bombé a sensiblement la forme d'une calotte sphérique.

6. Batteur-malaxeur portatif selon l'une des revendications précédentes, caractérisé par le fait que la dépression (18) présente un profil avec une surface qui, côté moteur, augmente de manière constante en direction de l'extérieur à partir d'un diamètre (21) très petit et qui lorsqu'on monte l'outil agit comme surface de guidage pour un bord (24) intérieur du moyeu (13).

7. Batteur-malaxeur portatif selon la revendication 6, caractérisé par le fait que le profil de la dépression (18), en coupe longitudinale, est courbe et a sensiblement la forme d'un cercle dont le centre (200) est situé à l'extérieur de l'arbre d'entraînement (6).

8. Batteur-malaxeur portatif selon les revendications 6 et 7, caractérisé par le fait que le rayon (22) du tronçon (19) bombé est inférieur au rayon de courbure de la dépression (18).

9. Batteur-malaxeur portatif selon l'une des revendications précédentes, caractérisé par le fait que la longueur dans la direction axiale du tronçon (19) bombé est inférieure à la longueur dans la direction axiale de la dépression (18).
